# EUROPEAN PATENT SPECIFICATION

(11) **EP 2 919 493 B1**
(45) Date of publication and mention of the grant of the patent: **17.08.2016**
(21) Application number: 12889358.3
(22) Date of filing: 30.11.2012
(51) Int. Cl.: H04W 4/10, H04W 4/22

(54) **GROUP CALL PROCESSING METHOD, ENODEB AND USER EQUIPMENT**
GRUPPENRUFVERARBEITUNGSVERFAHREN, ENODE-B UND BENUTZERVORRICHTUNG
PROCÉDÉ DE TRAITEMENT D'APPEL DE GROUPE, NOEUD B ÉVOLUÉ ET ÉQUIPEMENT UTILISATEUR

(43) Date of publication of application: 16.09.2015
(73) Proprietor: Huawei Technologies Co., Ltd., Longgang District Shenzhen, Guangdong 518129 (CN)
(72) Inventor: GUO, Yi, Shenzhen Guangdong 518129 (CN); ZENG, Qinghai, Shenzhen Guangdong 518129 (CN); DAI, Mingzeng, Shenzhen Guangdong 518129 (CN); HUANG, Qufang, Shenzhen Guangdong 518129 (CN)
(74) Representative: Thun, Clemens
(86) International application number: PCT/CN2012/085641
(87) International publication number: WO 2014/082291

(56) References cited:
- CN-A- 101 296 508
- CN-A- 101 309 463
- CN-A- 102 487 485
- CN-A- 102 487 485
- CN-A- 102 647 786
- US-A1- 2004 180 682
- US-A1- 2010 317 389

## Description

### TECHNICAL FIELD

The present invention relates to communications technologies, and in particular, to a group call processing method, a base station, and a user equipment.

### BACKGROUND

In the field of public safety, there is a wide range of users in trunking communications. The trunking communications is implemented mainly in a group call manner, that is, in a group, a calling user can start to talk immediately after pressing a PTT button, and all other members in the same group can hear a voice of this member.

For example, CN102487485 A refers to a group calling communication method for simultaneously calling several groups.

Further, US 2010/0317389A refers to a method and apparatus for transmitting and receiving group resource deallocation information in a communication system. The method in a base station includes transmitting group resource deallocation information, which includes information indicating a group including a plurality of Mobile Stations (MSs) receiving the group resource deallocation information, and information indicating whether a resource is allocated to each of the MSs.

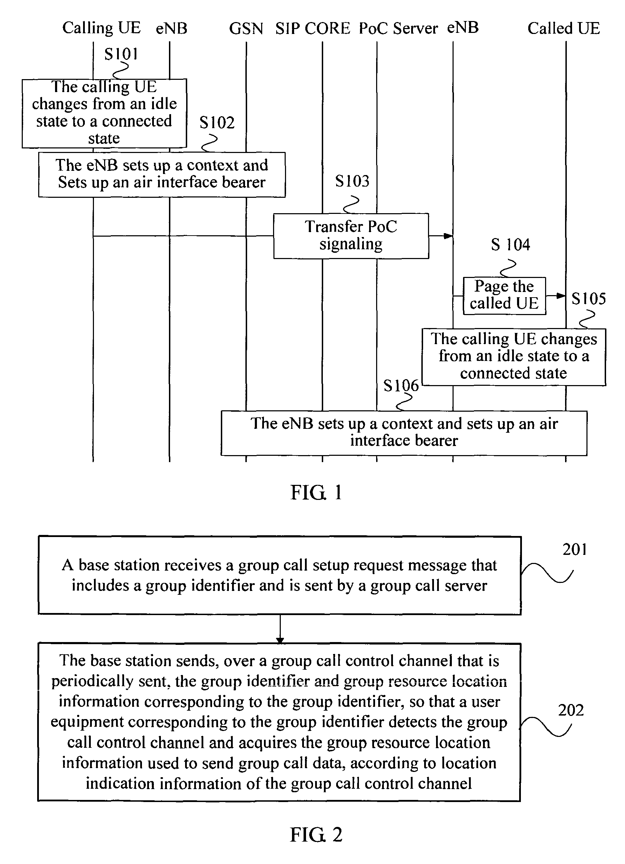

FIG. 1 is a schematic signaling diagram of a group call setup process in the prior art. As shown in FIG. 1, this process includes: S101: A calling user equipment (User Equipment, UE for short) changes from an idle state to a connected state, where latency is approximately 40 ms. S102: An evolved base station (Evolved Node-B, eNB for short) sets up a context and an air interface bearer. Specifically, after the UE sets up a radio resource control (Radio Resource Control, RRC for short) connection, the eNB sends an initial UE message to a mobility management entity (Mobility Management Entity, MME for short), the MME delivers an initial context message to the eNB, and the eNB sets up a UE context and sets up a corresponding radio bearer, where latency is approximately 60 ms. S103: Transfer push-to-talk over cellular (Push-to-Talk over Cellular, PoC for short) signaling. Specifically, after the air interface bearer setup is completed, the UE sends a PoC signaling invite (INVITE) message to a network, a Session Initiation Protocol CORE (Session Initiation Protocol CORE, SIP CORE for short) and a PoC server (Server) process the PoC signaling and forward the PoC signaling to a called UE; and after the called UE responds, the SIP CORE and the PoC server send a PoC response signaling message to the calling UE, where latency is approximately 400 ms. S104: Page the called UE, where latency is approximately 320 ms. S105: The called UE changes from an idle state to a connected state, where latency is approximately 40 ms. S106: An eNB on a called side sets up a context and a SIP air interface bearer, where latency is approximately 60 ms. In the entire group call setup process, latency of button processing on the calling UE and the called UE and PoC signaling processing at an application layer is approximately 100 ms. It can be learned from FIG. 1 that latency required in the group call setup process is approximately 1000 ms.

However, because the trunking communications is mainly used in fields such as commanding and dispatching, emergency calls, railway transportation, and public safety, and there is a relatively high requirement on latency of group call setup in these technical fields, latency of group call setup is relatively long in the prior art, and the latency requirement cannot be met.

### SUMMARY

Embodiments of the present invention provide a group call processing method, a base station, and a user equipment, which shorten latency of group call setup and can meet a high requirement on latency of group call setup in trunking communications.

According to a first aspect, an embodiment of the present invention provides a group call processing method performed by a base station, the method comprising:
receiving a group call setup request message that comprises a group identifier, identifying a group consisting of a calling user equipment and at least one called user equipment, and is sent by a group call server; and
sending, over a group call control channel periodically the group identifier and group resource location information corresponding to the group identifier, wherein the group resource location information indicates in which group resource all of the at least one called user equipment within the group identified by the sent group identifier receives group call data.

With reference to the first aspect, the group resource location information includes a sending period of the group call data.

With reference to the first aspect, the sending, over a group call control channel that is periodically sent, the group identifier and group resource location information corresponding to the group identifier further includes:
sending, over the group call control channel, a channel identifier corresponding to the group identifier.

With reference to the first aspect, the group resource location information further includes information about a start frame in which the group call data is located, or information about a start frame in which the group call data is located and information about a subframe in which the group call data is located.

With reference to the first aspect, before the sending, over a group call control channel that is periodically sent, the group identifier and group resource location information corresponding to the group identifier, the method further includes:
periodically broadcasting a system message, where the system message includes location indication information of the group call control channel.

With reference to the first aspect, the location indication information includes one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

According to a second aspect, an embodiment of the present invention provides a group call processing method performed by a called user equipment, the method comprising:
detecting a group call control channel according to location indication information, being information for detecting by the called user equipment the group call control channel, of the group call control channel periodically sent by a base station;
when the group call control channel comprises a group identifier, identifying a group consisting of a calling user equipment and at least one called user equipment, corresponding to the group to which the called user equipment belongs, receiving group resource location information, indicating at which group resource all of the at least one called user equipment within the group identified by the group identifier receive group call data, and comprised in the group call control channel; and
receiving, at a group resource location corresponding to the group resource location information, the group call data sent by the base station.

With reference to the second aspect, the group resource location information includes a sending period of the group call data.

With reference to the second aspect, the group resource location information further includes information about a start frame in which the group call data is located, or information about a start frame in which the group call data is located and information about a subframe in which the group call data is located.

With reference to the second aspect, before the detecting a group call control channel according to location indication information of the group call control channel periodically sent by the base station, the method further includes:
periodically receiving a system message broadcasted by the base station, where the system message includes the location indication information.

With reference to the second aspect, the location indication information includes one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

According to a third aspect, an embodiment of the present invention provides a base station, including:
a receiving module, configured to receive a group call setup request message that comprises a group identifier, identifying a group consisting of a calling user equipment and at least one called user equipment, and is sent by a group call server; and
a sending module, configured to send periodically, over a group call control channel, the group identifier and group resource location information corresponding to the group identifier, wherein the group resource location information indicates in which group resource all of the at least one called user equipment within the group identified by the sent group identifier receive group call data. With reference to the third aspect, the group resource location information includes a sending period of the group call data.

With reference to the third aspect, the sending module is further configured to send, over the group call control channel, a channel identifier corresponding to the group identifier.

With reference to the third aspect, the group resource location information further includes information about a start frame in which the group call data is located, or information about a start frame in which the group call data is located and information about a subframe in which the group call data is located.

With reference to the third aspect, the sending module is further configured to periodically broadcast a system message, where the system message includes location indication information of the group call control channel.

With reference to the third aspect, the location indication information includes one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

According to a fourth aspect, an embodiment of the present invention provides a called user equipment, comprising:
a detecting module, configured to detect a group call control channel according to location indication information, being information for detecting by the called user equipment the group call control channel, of the group call control channel periodically sent by a base station; and
a receiving module, configured to: when the detecting module detects that the group call control channel comprises a group identifier, identifying a group consisting of a calling user equipment and at least one called user equipment, corresponding to the group to which the called user equipment belongs, receive group resource location information, indicating at which group resource all of the at least one called user equipment within the group identified by the group identifier receive group call data, and comprised in the group call control channel, wherein
the receiving module is further configured to receive, at a group resource location corresponding to the group resource location information, the group call data sent by the base station.

With reference to the fourth aspect, the group resource location information further includes a sending period of the group call data.

With reference to the fourth aspect, the group resource location information further includes information about a start frame in which the group call data is located, or information about a start frame in which the group call data is located and information about a subframe in which the group call data is located.

With reference to the fourth aspect, the receiving module is further configured to periodically receive a system message broadcasted by the base station, where the system message includes the location indication information.

With reference to the fourth aspect, the location indication information includes one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

In embodiments of the present invention, a base station receives a group call setup request message that includes a group identifier and is sent by a group call server; and sends, over a group call control channel that is periodically sent, the group identifier and group resource location information corresponding to the group identifier, so that a user equipment corresponding to the group identifier detects the group call control channel and acquires the group resource location information used to send group call data, according to location indication information of the group call control channel. In this way, a group call setup process is implemented. Latency required in this process mainly depends on a period of the group call control channel that is periodically sent, and this period is relatively short and controllable, which can meet a high requirement on latency of group call setup in trunking communications.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic signaling diagram of a group call setup process in the prior art;
FIG. 2 is a schematic flowchart of Embodiment 1 of a group call processing method according to the present invention;
FIG. 3 is a schematic flowchart of Embodiment 2 of a group call processing method according to the present invention;
FIG. 4 is a schematic flowchart of Embodiment 3 of a group call processing method according to the present invention;
FIG 5 is a schematic flowchart of Embodiment 4 of a group call processing method according to the present invention;
FIG. 6 is a schematic structural diagram of Embodiment 1 of a base station according to the present invention;
FIG. 7 is a schematic structural diagram of Embodiment 1 of a user equipment according to the present invention;
FIG. 8 is a schematic structural diagram of Embodiment 2 of a base station according to the present invention; and
FIG. 9 is a schematic structural diagram of Embodiment 2 of a user equipment according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

FIG. 2 is a schematic flowchart of Embodiment 1 of a group call processing method according to the present invention. As shown in FIG. 2, the method in this embodiment includes:
S201: A base station receives a group call setup request message that includes a group identifier and is sent by a group call server.

Specifically, in a group, a calling UE sends a group call setup request message that includes a group identifier to a group call server, so as to make a request for sending group call data to another UE in the group; after receiving the group call setup request message, the group call server checks a corresponding database, so as to determine whether this group call can be initiated, where the database includes information such as the group identifier, a group member corresponding to the group identifier, and permission of the group member. When it is determined that the calling UE has permission to initiate a group call, the group call server sends the group call setup request message that includes the group identifier to a base station, and the base station receives the group call setup request message that includes the group identifier and is sent by the group call server.

It should be noted that, the group call server may be disposed independently, or may be integrated into an MME.

S202: The base station sends, over a group call control channel that is periodically sent, the group identifier and group resource location information corresponding to the group identifier, so that a user equipment corresponding to the group identifier detects the group call control channel and acquires the group resource location information used to send group call data, according to location indication information of the group call control channel.

Specifically, after receiving the group call setup request message that includes the group identifier and is sent by the group call server, the base station sends, over the group call control channel that is periodically sent, the group identifier and the group resource location information corresponding to the group identifier, where a period of sending the group call control channel may be set to 10 ms, 20 ms, 40 ms, or the like, and is determined according to an actual application environment; and the group call server uses a base station serving the calling UE to notify the calling UE that the group call is successfully set up, and the calling UE can send group call data. A called UE corresponding to the group identifier in the group call setup request message detects the group call control channel according to the location indication information of the group call control channel. When the called UE detects that the group identifier over the group call control channel is consistent with the group identifier of the called UE, it indicates that a group call is initiated in a group to which the called UE belongs, and the called UE further acquires the group resource location information for sending the group call data. The called UE acquires the group call data at a group resource location corresponding to the group resource location information. Compared with the prior art, it is not required to page the called UE in this group call setup process, where the called UE may detect the group call control channel according to the location indication information of the group call control channel, so as to learn whether a group call is initiated in the group to which the called UE belongs; in addition, it is not required to set up a bearer between the called UE and the base station in this group call setup process, where the called UE may acquire, through the detected group call control channel over which the group identifier is consistent with the group identifier of the called UE, the group resource location information for sending the group call data, and receive the group call data at the corresponding group resource location.

In this embodiment, a base station receives a group call setup request message that includes a group identifier and is sent by a group call server; and sends, over a group call control channel that is periodically sent, the group identifier and group resource location information corresponding to the group identifier, so that a user equipment corresponding to the group identifier detects the group call control channel and acquires the group resource location information used to send group call data, according to location indication information of the group call control channel, In this way, a group call setup process is implemented. Latency required in this process mainly depends on a period of the group call control channel that is periodically sent, and this period is relatively short and controllable, which can meet a high requirement on latency of group call setup in trunking communications.

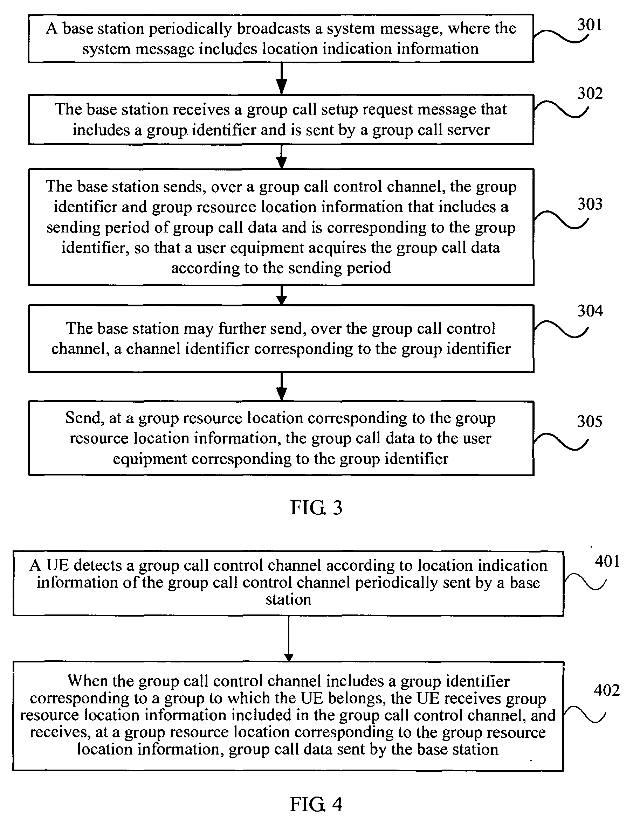

FIG. 3 is a schematic flowchart of Embodiment 2 of a group call processing method according to the present invention. As shown in FIG. 3, the method in this embodiment includes:
S301: A base station periodically broadcasts a system message, where the system message includes location indication information.

Specifically, prior to step 202 in the method embodiment shown in FIG. 2, in this step, the base station periodically broadcasts the system message that includes the location indication information of a group call control channel, so that a UE that receives the system message detects the group call control channel according to the location indication information. This method is one manner in which the UE acquires the location indication information of the group call control channel, and the UE may also acquire the location indication information of the group call control channel in another manner, which is not limited in this embodiment of the present invention.

Further, the foregoing location indication information may be:
information about a sending period of the group call control channel;
information about a sending period of the group call control channel and information about a start frame in which the group call control channel is located; or information about a sending period of the group call control channel, information about a start frame of the group call control channel, and information about a subframe of the group call control channel.

When the location indication information is the information about the sending period of the group call control channel, specifically, the UE determines, by detecting whether a physical downlink control channel (Physical downlink control channel, PDCCH for short) in subframes within one sending period carries a group call control channel identifier, a location of the first group call control channel, where the group call control channel identifier may be a radio network temporary identifier (Radio Network Temporary Identifier, RNTI for short) of a group call; then, the UE detects the group call control channel at a corresponding location every other sending period; and the UE acquires group resource location information for sending group call data and receives group call data at a corresponding group resource location after the UE detects that a group identifier over the group call control channel is consistent with a group identifier of the UE.

When the location indication information is the sending period of the group call control channel and the information about the start frame in which the group call control channel is located, specifically, the UE starts to perform detection from the 0^{th} frame of the start frame, and can determine a location of the first group call control channel by detecting subframes within one frame period at most; then, the UE detects the group call control channel at a corresponding location every other sending period; and the UE acquires group resource location information for sending group call data and receives group call data at a corresponding group resource location after the UE detects that a group identifier over the group call control channel is consistent with a group identifier of the UE.

When the location indication information is the sending period of the group call control channel, the information about the start frame in which the group call control channel is located, and the information about the subframe in which the group call control channel is located, specifically, the UE may directly detect the group call control channel at a location corresponding to the location indication information, and the UE acquires group resource location information for sending group call data and receives group call data at a corresponding group resource location after the UE detects that a group identifier of the group call control channel is consistent with a group identifier of the UE.

S302: The base station receives a group call setup request message that includes a group identifier and is sent by a group call server.

Specifically, this step is similar to step 201 in method embodiment 1 of the present invention, and a difference is that this group call setup request message may further include latency requirement information.

The base station may determine a sending period of the group call data according to the latency requirement information.

S303: The base station sends, over a group call control channel, the group identifier and group resource location information that includes a sending period of group call data and is corresponding to the group identifier, so that a user equipment acquires the group call data according to the sending period.

S304: The base station may further send, over the group call control channel, a channel identifier corresponding to the group identifier.

In step S303 and step S304, the group resource location information may further include information about a start frame in which the group call data is located, or information about a start frame in which the group call data is located and information about a subframe in which the group call data is located.

When the group resource location information includes the sending period, specifically, the UE may determine, by detecting subframes within one sending period, a location of the start frame in which the group call data is located and a location of the subframe in which the group call data is located. More specifically, the UE may determine, by detecting whether the PDCCH carries a group identifier, whether there is group call data, and then receives, according to the sending period, group call data at a corresponding group resource location every other period.

When the group resource location information further includes the information about the start frame in which the group call data is located, specifically, the UE starts to perform detection from the 0^{th} frame of the start frame. More specifically, the UE may determine, by detecting whether the PDCCH carries a group identifier, whether there is group call data, and can determine, by detecting subframes within one frame period at most, a location of a start frame in which the group call data is located and a location of a subframe in which the group call data is located; and then, the UE receives, according to the sending period, group call data at a corresponding group resource location every other period.

When the group resource location information further includes the information about the start frame in which the group call data is located and the information about the subframe in which the group call data is located, specifically, the UE receives group call data at a corresponding group resource location indicated in the group resource location information.

S305: Send, at a group resource location corresponding to the group resource location information, the group call data to the user equipment corresponding to the group identifier.

Specifically, the group call data is directly sent over a physical downlink shared channel (Physical downlink shared channel, PDSCH for short) at the group resource location.

When the group resource location is shared by multiple groups, the group identifier is sent over a PDCCH at the group resource location, and the group call data is sent over the PDSCH at the group resource location. The group identifier is sent over the PDCCH at the group resource location, so as to indicate whether there is group call data of a called UE over the PDSCH behind the PDCCH.

Alternatively, group call data carried over a PDSCH further includes the corresponding channel identifier used to indicate the group identifier. After receiving the group call data, the UE parses out the channel identifier in the group call data carried over the PDSCH and matches the channel identifier with a channel identifier of the UE, so as to determine whether the group call data is group call data of the UE; if the channel identifier in the group call data is consistent with the channel identifier of the UE, the UE reserves the group call data; and if not, the UE discards the group call data. Specifically, the group identifier may be indicated by using a logical channel identifier in a MAC header of the group call data. After receiving the group call data, the UE parses out the logical channel identifier in the MAC header and matches the logical channel identifier with a logical channel identifier of the UE itself, so as to determine whether the group call data is group call data of the UE itself; if the logical channel identifier in the MAC header is consistent with the logical channel identifier of the UE itself, the UE reserves the group call data; and if not, the UE discards the group call data.

In this embodiment, a base station periodically broadcasts a system message, so that a UE obtains location indication information of a group call control channel; the UE periodically detects the group call control channel according to the location indication information, so as to learn whether a group call is initiated in a group to which the UE belongs; and the UE receives group call data at a corresponding group resource location according to group resource location information indicated by the group call control channel. Latency of this group call setup process is short, and all called UEs in a same group in a same cell may receive group call data at a same group resource location, thereby implementing downlink resource sharing. In a call process, the UE acquires group call data according to a sending period of a group resource; therefore, it is not required to detect, at each timeslot, whether there is group call data, thereby avoiding unnecessary power consumption.

FIG. 4 is a schematic flowchart of Embodiment 3 of a group call processing method according to the present invention. As shown in FIG. 4, the method in this embodiment includes:
S401: A UE detects a group call control channel according to location indication information of the group call control channel periodically sent by a base station.

Specifically, the base station periodically sends the location indication information of the group call control channel; after receiving the location indication information of the group call control channel, the UE detects the group call control channel at a corresponding location of the group call control channel.

S402: When the group call control channel includes a group identifier corresponding to a group to which the UE belongs, the UE receives group resource location information included in the group call control channel, and receives, at a group resource location corresponding to the group resource location information, group call data sent by the base station.

Specifically, the UE detects the group call control channel according to the location indication information of the group call control channel periodically sent by the base station; the base station sends, over the group call control channel that is periodically sent, the group identifier and the group resource location information corresponding to the group identifier; and when the UE detects that the group call control channel includes the group identifier corresponding to the group to which the UE belongs, it indicates that a group call is initiated in the group to which the UE belongs, and the UE acquires the group resource location information included in the group call control channel, and further receives, at the group resource location corresponding to the group resource location information, the group call data sent by the base station.

Compared with the prior art, the base station is not required to page the UE in this group call setup process, and the UE enters a connected state from an idle state and sets up a bearer process between a called UE and the base station.

In this embodiment, a UE detects a group call control channel according to location indication information of the group call control channel periodically sent by a base station, so as to learn whether a group call is initiated in a group to which the UE belongs; and when the UE detects that the group call control channel includes a group identifier corresponding to the group to which the UE belongs, the UE receives group resource location information included in the group call control channel, and receives, at a group resource location corresponding to the group resource location information, group call data sent by the base station. In this way, a group call setup process is implemented. In this process, the UE can learn, by detecting the group call control channel according to the location indication information of the group call control channel, whether a group call is initiated, and can learn, according to the group resource location information in the group call control channel, when and where to receive group call data. Latency required in this process mainly depends on a period of the group call control channel that is periodically sent, and this period is relatively short and controllable, which can meet a high requirement on latency of group call setup in trunking communications.

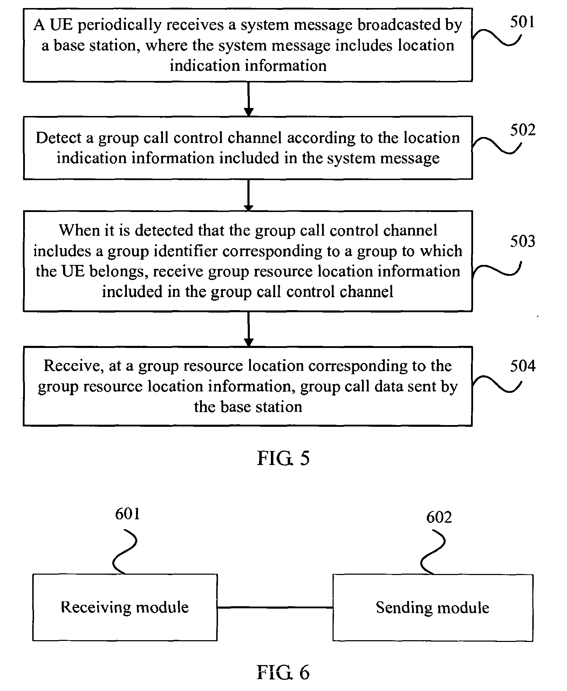

FIG. 5 is a schematic flowchart of Embodiment 4 of a group call processing method according to the present invention. As shown in FIG. 5, the method in this embodiment includes:
S501: A UE periodically receives a system message broadcasted by a base station, where the system message includes location indication information.
S502: Detect a group call control channel according to the location indication information included in the system message.

Specifically, the base station periodically broadcasts the system message that includes the location indication information of the group call control channel; the UE periodically receives the system message broadcasted by the base station, and detects the group call control channel according to the location indication information of the group call control channel in the system message, so as to learn whether a group call of a group to which the UE belongs is initiated.

Further, the foregoing location indication information may be:
information about a sending period of the group call control channel;
information about a sending period of the group call control channel and information about a start frame in which the group call control channel is located; or information about a sending period of the group call control channel, information about a start frame in which the group call control channel is located, and information about a subframe in which the group call control channel is located.

When the location indication information is the information about the sending period of the group call control channel, specifically, the UE determines, by detecting whether a PDCCH within one sending period carries a group call control channel identifier, a location of the first group call control channel, where the group call control channel identifier may be an RNTI of a group call; then, the UE detects the group call control channel at a corresponding location every other sending period; and the UE acquires group resource location information for sending group call data and receives group call data at a corresponding group resource location after the UE detects that a group identifier over the group call control channel is consistent with a group identifier of the UE.

When the location indication information is the sending period of the group call control channel and the information about the start frame in which the group call control channel is located, specifically, the UE starts to perform detection from the 0^{th} frame of the start frame, and can determine a location of the first group call control channel by detecting subframes within one frame period at most; then, the UE detects the group call control channel at a corresponding location every other sending period; and the UE acquires group resource location information for sending group call data and receives group call data at a corresponding group resource location after the UE detects that a group identifier over the group call control channel is consistent with a group identifier of the UE.

When the location indication information is the sending period of the group call control channel, the information about the start frame in which the group call control channel is located, and the information about the subframe in which the group call control channel is located, specifically, the UE may directly detect the group call control channel at a location corresponding to the location indication information, and the UE acquires group resource location information for sending group call data and receives group call data at a corresponding group resource location after the UE detects that a group identifier of the group call control channel is consistent with a group identifier of the UE.

S503: When it is detected that the group call control channel includes a group identifier corresponding to a group to which the UE belongs, receive group resource location information included in the group call control channel.

Specifically, the group resource location information includes: a sending period of group call data.

Optionally, the group resource location information may further include information about a start frame in which the group call data is located, or information about a start frame in which the group call data is located and information about a subframe in which the group call data is located.

When the group resource location information includes the sending period, specifically, the UE may determine, by detecting subframes within one sending period, a location of the start frame in which the group call data is located and a location of the subframe in which the group call data is located. More specifically, the UE may determine, by detecting whether the PDCCH carries a group identifier, whether there is group call data, and then receives, according to the sending period, group call data at a corresponding group resource location every other period.

When the group resource location information further includes the information about the start frame in which the group call data is located, specifically, the UE starts to perform detection from the 0^{th} frame of the start frame. More specifically, the UE may determine, by detecting whether the PDCCH carries a group identifier, whether there is group call data, and can determine, by detecting subframes within one frame period at most, a location of a start frame in which the group call data is located and a location of a subframe in which the group call data is located; and then, the UE receives, according to the sending period, group call data at a corresponding group resource location every other period.

When the group resource location information further includes the information about the start frame in which the group call data is located and the information about the subframe in which the group call data is located, specifically, the UE receives group call data at a corresponding group resource location indicated in the group resource location information.

S504: Receive, at a group resource location corresponding to the group resource location information, group call data sent by the base station.

Specifically, after the group resource location information included in the group call control channel is acquired, the group call data sent by the base station is received at the group resource location corresponding to the group resource location information.

More specifically, the group call data may be directly received over a PDSCH at the group resource location.

When the group resource location is shared by multiple groups, the group identifier may be received over a PDCCH at the group resource location, and the group call data may be received over the PDSCH at the group resource location. The group identifier is received over the PDCCH at the group resource location, so as to determine whether there is group call data of a called UE over the PDSCH behind the PDCCH.

If the group identifier over the PDCCH is consistent with a group identifier of the called UE, it indicates that there is group call data of the called UE over the PDSCH behind the PDCCH, and the group call data over the PDSCH is received; and if not, after one period wait, it is determined, at a next group resource location, whether a group identifier over the PDCCH is consistent with the group identifier of the called UE, and the foregoing step is repeated.

Alternatively, the UE first receives group call data over a PDSCH at the group resource location, and then receives, in the group call data carried over the PDSCH, a corresponding channel identifier used to indicate the group identifier. The UE parses out the channel identifier in the group call data and matches the channel identifier with a channel identifier of the UE, so as to determine whether the group call data is group call data of the UE; if the channel identifier in the group call data is consistent with the channel identifier of the UE, the UE reserves the group call data; and if not, the UE discards the group call data. Specifically, the group identifier may be indicated by using a logical channel identifier in a MAC header of the group call data. After receiving the group call data, the UE parses out the logical channel identifier in the MAC header and matches the logical channel identifier with a logical channel identifier of the UE, so as to determine whether the group call data is group call data of the UE; if the logical channel identifier in the MAC header is consistent with the logical channel identifier of the UE, the UE reserves the group call data; and if not, the UE discards the group call data.

In this embodiment, a UE periodically receives a system message broadcasted by a base station, so that the UE obtains location indication information of a group call control channel; the UE periodically detects the group call control channel according to the location indication information, so as to learn whether a group call is initiated in a group to which the UE belongs; and the UE receives group call data at a corresponding group resource location according to group resource location information indicated by the group call control channel. Latency of this group call setup process is short, and all called UEs in a same group in a same cell may receive group call data at a same group resource location, thereby implementing downlink resource sharing. In a call process, the UE acquires group call data according to a sending period of a group resource; therefore, it is not required to detect, at each timeslot, whether there is group call data, thereby avoiding unnecessary power consumption.

FIG. 6 is a schematic structural diagram of Embodiment 1 of a base station according to the present invention. As shown in FIG. 6, the base station in this embodiment includes a receiving module 601 and a sending module 602. The receiving module 601 is configured to receive a group call setup request message that includes a group identifier and is sent by a group call server; and the sending module 602 is configured to send, over a group call control channel that is periodically sent, the group identifier and group resource location information corresponding to the group identifier, so that a user equipment corresponding to the group identifier detects the group call control channel and acquires the group resource location information used to send group call data, according to location indication information of the group call control channel.

The base station in this embodiment is used to perform the technical solution in the method embodiment shown in FIG. 2. Implementation principles and technical effects are similar to those of the method embodiment, and are not described herein again.

In the foregoing embodiment, the group resource location information includes a sending period of the group call data, so that the user equipment acquires the group call data according to the sending period.

In the foregoing embodiment, the sending module 602 is further configured to send, over the group call control channel, a channel identifier corresponding to the group identifier.

In the foregoing embodiment, the group resource location information further includes information about a start frame in which the group call data is located, or information about a start frame in which the group call data is located and information about a subframe in which the group call data is located.

In the foregoing embodiment, the sending module 602 is further configured to periodically broadcast a system message, where the system message includes the location indication information. The location indication information includes one type of the following information: information about a sending period of the group call control channel; information about a sending period of the group call control channel and information about a start frame in which the group call control channel is located; or information about a sending period of the group call control channel, information about a start frame in which the group call control channel is located, and information about a subframe in which the group call control channel is located.

In the foregoing embodiment, the sending module 602 is further configured to send, at a group resource location corresponding to the group resource location information, the group call data to the user equipment corresponding to the group identifier.

In the foregoing embodiment, when the sending module 602 is configured to send, at the group resource location corresponding to the group resource location information, the group call data to the user equipment corresponding to the group identifier, the sending module 602 is specifically configured to send the group identifier over a PDCCH at the group resource location, and send the group call data over a PDSCH at the group resource location.

In the foregoing embodiment, group call data carried over a PDSCH further includes the corresponding channel identifier used to indicate the group identifier.

The base station in this embodiment is used to perform the technical solution in the method embodiment shown in FIG. 3. Implementation principles and technical effects are similar to those of the method embodiment, and are not described herein again.

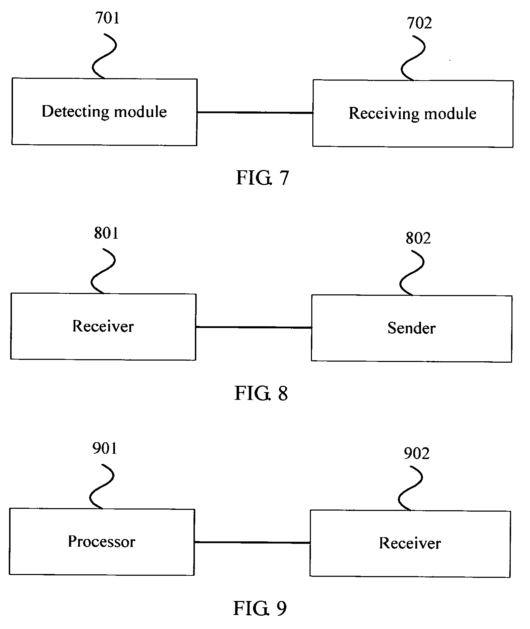

FIG. 7 is a schematic structural diagram of Embodiment 1 of a user equipment according to the present invention. As shown in FIG. 7, the user equipment in this embodiment includes: a detecting module 701 and a receiving module 702. The detecting module 701 is configured to detect a group call control channel according to location indication information of the group call control channel periodically sent by a base station; and the receiving module 702 is configured to: when the detecting module 701 detects that the group call control channel includes a group identifier corresponding to a belonging group, receive group resource location information included in the group call control channel; where the receiving module 702 is further configured to receive, at a group resource location corresponding to the group resource location information, group call data sent by the base station.

The user equipment in this embodiment is used to perform the technical solution in the method embodiment shown in FIG. 4. Implementation principles and technical effects are similar to those of the method embodiment, and are not described herein again.

In the foregoing embodiment, the group resource location information further includes a sending period of the group call data.

In the foregoing embodiment, the group resource location information further includes information about a start frame in which the group call data is located, or information about a start frame in which the group call data is located and information about a subframe in which the group call data is located.

In the foregoing embodiment, the receiving module 702 is further configured to periodically receive a system message broadcasted by the base station, where the system message includes the location indication information. The location indication information includes one type of the following information: information about a sending period of the group call control channel; information about a sending period of the group call control channel and information about a start frame in which the group call control channel is located; or information about a sending period of the group call control channel, information about a start frame in which the group call control channel is located, and information about a subframe in which the group call control channel is located.

In the foregoing embodiment, when the receiving module 702 is configured to receive, at the group resource location corresponding to the group resource location information, the group call data sent by the base station, the receiving module 702 is specifically configured to receive the group identifier over a PDCCH at the group resource location, and receive the group call data over a PDSCH at the group resource location.

In the foregoing embodiment, when the receiving module 702 is configured to receive, at the group resource location corresponding to the group resource location information, the group call data sent by the base station, the receiving module 702 is specifically configured to receive, in group call data carried over a PDSCH, a corresponding channel identifier used to indicate the group identifier.

The user equipment in this embodiment is used to perform the technical solution in the method embodiment shown in FIG. 5. Implementation principles and technical effects are similar to those of the method embodiment, and are not described herein again.

FIG. 8 is a schematic structural diagram of Embodiment 2 of a base station according to the present invention. As shown in FIG. 8, the base station in this embodiment includes a receiver 801 and a sender 802. The receiver 801 is configured to receive a group call setup request message that includes a group identifier and is sent by a group call server; and the sender 802 is configured to send, over a group call control channel that is periodically sent, the group identifier and group resource location information corresponding to the group identifier, so that a user equipment corresponding to the group identifier detects the group call control channel and acquires the group resource location information used to send group call data, according to location indication information of the group call control channel.

The base station in this embodiment is used to perform the technical solution in the method embodiment shown in FIG. 2. Implementation principles and technical effects are similar to those of the method embodiment, and are not described herein again.

In the foregoing embodiment, the group resource location information includes a sending period of the group call data, so that the user equipment acquires the group call data according to the sending period.

In the foregoing embodiment, the sender 802 is further configured to send, over the group call control channel, a channel identifier corresponding to the group identifier.

In the foregoing embodiment, the group resource location information further includes information about a start frame in which the group call data is located, or information about a start frame in which the group call data is located and information about a subframe in which the group call data is located.

In the foregoing embodiment, the sender 802 is further configured to periodically broadcast a system message, where the system message includes the location indication information. The location indication information includes one type of the following information: information about a sending period of the group call control channel; information about a sending period of the group call control channel and information about a start frame in which the group call control channel is located; or information about a sending period of the group call control channel, information about a start frame in which the group call control channel is located, and information about a subframe in which the group call control channel is located.

In the foregoing embodiment, the sender 802 is further configured to send, at a group resource location corresponding to the group resource location information, the group call data to the user equipment corresponding to the group identifier.

In the foregoing embodiment, when the sender 802 is configured to send, at the group resource location corresponding to the group resource location information, the group call data to the user equipment corresponding to the group identifier, the sender 802 is specifically configured to send the group identifier over a PDCCH at the group resource location, and send the group call data over a PDSCH at the group resource location.

In the foregoing embodiment, group call data carried over a PDSCH further includes the corresponding channel identifier used to indicate the group identifier.

The base station in this embodiment is used to perform the technical solution in the method embodiment shown in FIG. 3. Implementation principles and technical effects are similar to those of the method embodiment, and are not described herein again.

FIG. 9 is a schematic structural diagram of Embodiment 2 of a user equipment according to the present invention. As shown in FIG. 9, the user equipment in this embodiment includes: a processor 901 and a receiver 902. The processor 901 is configured to detect a group call control channel according to location indication information of the group call control channel periodically sent by a base station; and the receiver 902 is configured to: when the processor 901 detects that the group call control channel includes a group identifier corresponding to a belonging group, receive group resource location information included in the group call control channel; where the receiver 902 is further configured to receive, at a group resource location corresponding to the group resource location information, group call data sent by the base station.

The user equipment in this embodiment is used to perform the technical solution in the method embodiment shown in FIG. 4. Implementation principles and technical effects are similar to those of the method embodiment, and are not described herein again.

In the foregoing embodiment, the group resource location information further includes a sending period of the group call data.

In the foregoing embodiment, the group resource location information further includes information about a start frame in which the group call data is located, or information about a start frame in which the group call data is located and information about a subframe in which the group call data is located.

In the foregoing embodiment, the receiver 902 is further configured to periodically receive a system message broadcasted by the base station, where the system message includes the location indication information. The location indication information includes one type of the following information: information about a sending period of the group call control channel; information about a sending period of the group call control channel and information about a start frame in which the group call control channel is located; or information about a sending period of the group call control channel, information about a start frame in which the group call control channel is located, and information about a subframe in which the group call control channel is located.

In the foregoing embodiment, when the receiver 902 is configured to receive, at the group resource location corresponding to the group resource location information, the group call data sent by the base station, the receiver 902 is specifically configured to receive the group identifier over a PDCCH at the group resource location, and receive the group call data over a PDSCH at the group resource location.

In the foregoing embodiment, when the receiver 902 is configured to receive, at the group resource location corresponding to the group resource location information, the group call data sent by the base station, the receiver 902 is specifically configured to receive, in group call data carried over a PDSCH, a corresponding channel identifier used to indicate the group identifier.

The user equipment in this embodiment is used to perform the technical solution in the method embodiment shown in FIG. 5. Implementation principles and technical effects are similar to those of the method embodiment, and are not described herein again.

Persons of ordinary skill in the art may understand that all or a part of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A group call processing method performed by a base station, the method comprising:
receiving a group call setup request message that comprises a group identifier, identifying a group consisting of a calling user equipment and at least one called user equipment, and is sent by a group call server; and
sending, over a group call control channel periodically the group identifier and group resource location information corresponding to the group identifier, wherein the group resource location information indicates in which group resource all of the at least one called user equipment within the group identified by the sent group identifier receives group call data..

2. The method according to claim 1, wherein the group resource location information comprises a sending period of the group call data.

3. The method according to claim 1 or 2, wherein the sending, over a group call control channel that is periodically sent, the group identifier and group resource location information corresponding to the group identifier further comprises:
sending, over the group call control channel, a channel identifier corresponding to the group identifier.

4. The method according to claim 2 or 3, wherein the group resource location information further comprises information about a start frame in which the group call data is located, or, information about a start frame in which the group call data is located and information about a subframe in which the group call data is located.

5. The method according to any one of claims 1 to 4, wherein before the sending, over a group call control channel that is periodically sent, the group identifier and group resource location information corresponding to the group identifier, the method further comprises:
periodically broadcasting a system message, wherein the system message comprises location indication information of the group call control channel.

6. The method according to any one of claims 1 to 5, wherein the location indication information comprises one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

7. A group call processing method performed by a called user equipment, the method comprising:
detecting a group call control channel according to location indication information, being information for detecting by the called user equipment the group call control channel, of the group call control channel periodically sent by a base station;
when the group call control channel comprises a group identifier, identifying a group consisting of a calling user equipment and at least one called user equipment, corresponding to the group to which the called user equipment belongs, receiving group resource location information, indicating at which group resource all of the at least one called user equipment within the group identified by the group identifier receive group call data, and comprised in the group call control channel; and
receiving, at a group resource location corresponding to the group resource location information, the group call data sent by the base station.

8. The method according to claim 7, wherein the group resource location information comprises a sending period of the group call data.

9. The method according to claim 8, wherein the group resource location information further comprises information about a start frame in which the group call data is located, or information about a start frame in which the group call data is located and information about a subframe in which the group call data is located.

10. The method according to any one of claims 7 to 9, wherein before the detecting a group call control channel according to location indication information of the group call control channel periodically sent by the base station, the method further comprises:
periodically receiving a system message broadcasted by the base station, wherein the system message comprises the location indication information.

11. The method according to any one of claims 7 to 10, wherein the location indication information comprises one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

12. A base station, comprising:
a receiving module, configured to receive a group call setup request message that comprises a group identifier, identifying a group consisting of a calling user equipment and at least one called user equipment, and is sent by a group call server; and
a sending module, configured to send periodically, over a group call control channel, the group identifier and group resource location information corresponding to the group identifier, wherein the group resource location information indicates in which group resource all of the at least one called user equipment within the group identified by the sent group identifier receive group call data.

13. The base station according to claim 12, wherein the group resource location information comprises a sending period of the group call data..

14. The base station according to claim 12 or 13, wherein the sending module is further configured to send, over the group call control channel, a channel identifier corresponding to the group identifier.

15. The base station according to claim 13 or 14, wherein the group resource location information further comprises information about a start frame in which the group call data is located, or information about a start frame in which the group call data is located and information about a subframe in which the group call data is located.

16. The base station according to any one of claims 12 to 15, wherein:
the sending module is further configured to periodically broadcast a system message, wherein the system message comprises location indication information of the group call control channel.

17. The base station according to any one of claims 12 to 16, wherein the location indication information comprises one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

18. A called user equipment, comprising:
a detecting module, configured to detect a group call control channel according to location indication information, being information for detecting by the called user equipment the group call control channel, of the group call control channel periodically sent by a base station; and
a receiving module, configured to: when the detecting module detects that the group call control channel comprises a group identifier, identifying a group consisting of a calling user equipment and at least one called user equipment, corresponding to the group to which the called user equipment belongs, receive group resource location information, indicating at which group resource all of the at least one called user equipment within the group identified by the group identifier receive group call data, and comprised in the group call control channel, wherein
the receiving module is further configured to receive, at a group resource location corresponding to the group resource location information, the group call data sent by the base station.

19. The called user equipment according to claim 18, wherein the group resource location information further comprises a sending period of the group call data.

20. The called user equipment according to claim 19, wherein the group resource location information further comprises information about a start frame in which the group call data is located, or information about a start frame in which the group call data is located and information about a subframe in which the group call data is located.

21. The called user equipment according to any one of claims 18 to 20, wherein:
the receiving module is further configured to periodically receive a system message broadcasted by the base station, wherein the system message comprises the location indication information.

22. The called user equipment according to any one of claims 18 to 21, wherein the location indication information comprises one type of the following information:
information about a sending period of the group call control channel;
information about a sending period of the group call control channel and information about a start frame in which the group call control channel is located; or
information about a sending period of the group call control channel, information about a start frame in which the group call control channel is located, and information about a subframe in which the group call control channel is located.

## Patentansprüche

1. Gruppenrufverarbeitungsverfahren, das von einer Basisstation durchgeführt wird, wobei das Verfahren umfasst:
Empfangen einer Nachricht zur Anforderung des Einrichtens eines Gruppenanrufs, die einen Gruppenidentifikator umfasst, der eine Gruppe identifiziert, die aus einem anrufenden Benutzergerät und mindestens einem angerufenen Benutzergerät besteht, und durch einen Gruppenrufserver gesendet wird; und
periodisches Senden des Gruppenidentifikators und der Gruppenressourcenortsinformationen, die dem Gruppenidentifikator entsprechen, über einen Gruppenrufsteuerungskanal, wobei die Gruppenressourcenortsinformationen angeben, in welcher Gruppenressource alle des mindestens einen angerufenen Benutzergeräts innerhalb der durch den gesendeten Gruppenidentifikator identifizierten Gruppe Gruppenrufdaten empfangen.

2. Verfahren nach Anspruch 1, wobei die Gruppenressourcenortsinformationen eine Sendeperiode der Gruppenrufdaten umfassen.

3. Verfahren nach Anspruch 1 oder 2, wobei das Senden des Gruppenidentifikators und der Gruppenressourcenortsinformationen, die dem Gruppenidentifikator entsprechen, über einen Gruppenrufsteuerungskanal, der periodisch gesendet wird, ferner umfasst: Senden eines Kanalidentifikators, der dem Gruppenidentifikator entspricht, über den Gruppenrufsteuerungskanal.

4. Verfahren nach Anspruch 2 oder 3, wobei die Gruppenressourcenortsinformationen ferner Informationen über einen Startrahmen, in dem sich die Gruppenrufdaten befinden, oder Informationen über einen Startrahmen, in dem sich die Gruppenrufdaten befinden, und Informationen über einen Subrahmen, in dem sich die Gruppenrufdaten befinden, umfassen.

5. Verfahren nach einem der Ansprüche 1 bis 4, wobei das Verfahren vor dem Senden des Gruppenidentifikators und der Gruppenressourcenortsinformationen, die dem Gruppenidentifikator entsprechen, über einen Gruppenrufsteuerungskanal, der periodisch gesendet wird, ferner umfasst:
periodisches Broadcasten einer Systemnachricht, wobei die Systemnachricht Ortsangabeinformationen des Gruppenrufsteuerungskanals umfasst.

6. Verfahren nach einem der Ansprüche 1 bis 5, wobei die Ortsangabeinformationen einen Typ der folgenden Informationen umfassen:
Informationen über eine Sendeperiode des Gruppenrufsteuerungskanals;
Informationen über eine Sendeperiode des Gruppenrufsteuerungskanals und Informationen über einen Startrahmen, in dem sich der Gruppenrufsteuerungskanal befindet; oder
Informationen über eine Sendeperiode des Gruppenrufsteuerungskanals, Informationen über einen Startrahmen, in dem sich der Gruppenrufsteuerungskanal befindet, und Informationen über einen Subrahmen, in dem sich der Gruppenrufsteuerungskanal befindet.

7. Gruppenrufverarbeitungsverfahren, das von einem angerufenen Benutzergerät durchgeführt wird, wobei das Verfahren umfasst:
Erkennen eines Gruppenrufsteuerungskanals gemäß den Ortsangabeinformationen, die Informationen zum Erkennen des Gruppenrufsteuerungskanals von dem Gruppenrufsteuerungskanal, der periodisch durch eine Basisstation gesendet wird, durch das angerufene Benutzergerät sind;
wenn der Gruppenrufsteuerungskanal einen Gruppenidentifikator umfasst, Identifizieren einer Gruppe bestehend aus einem anrufenden Benutzergerät und mindestens einem angerufenen Benutzergerät entsprechend der Gruppe, zu der das angerufene Benutzergerät gehört, Empfangen von Gruppenressourcenortsinformationen, die angeben, auf welcher Gruppenressource alle des mindestens einen angerufenen Benutzergeräts innerhalb der durch den Gruppenidentifikator identifizierten Gruppe Gruppenrufdaten empfangen, und die in dem Gruppenrufsteuerungskanal enthalten sind; und
Empfangen der durch die Basisstation gesendeten Gruppenrufdaten an einem Gruppenressourcenort, der den Gruppenressourcenortsinformationen entspricht.

8. Verfahren nach Anspruch 7, wobei die Gruppenressourcenortsinformationen eine Sendeperiode der Gruppenrufdaten umfassen.

9. Verfahren nach Anspruch 8, wobei die Gruppenressourcenortsinformationen ferner Informationen über einen Startrahmen, in dem sich die Gruppenrufdaten befinden, oder Informationen über einen Startrahmen, in dem sich die Gruppenrufdaten befinden, und Informationen über einen Subrahmen, in dem sich die Gruppenrufdaten befinden, umfassen.

10. Verfahren nach einem der Ansprüche 7 bis 9, wobei das Verfahren vor dem Erkennen eines Gruppenrufsteuerungskanals entsprechend Ortsangabeinformationen des periodisch durch die Basisstation gesendeten Gruppenrufsteuerungskanals ferner umfasst: periodisches Empfangen einer durch die Basisstation als Broadcast abgestrahlten Systemnachricht, wobei die Systemnachricht die Ortsangabeinformationen umfasst.

11. Verfahren nach einem der Ansprüche 7 bis 10, wobei die Ortsangabeinformationen einen Typ der folgenden Informationen umfassen:
Informationen über eine Sendeperiode des Gruppenrufsteuerungskanals; Informationen über eine Sendeperiode des Gruppenrufsteuerungskanals und Informationen über einen Startrahmen, in dem sich der Gruppenrufsteuerungskanal befindet; oder
Informationen über eine Sendeperiode des Gruppenrufsteuerungskanals, Informationen über einen Startrahmen, in dem sich der Gruppenrufsteuerungskanal befindet, und Informationen über einen Subrahmen, in dem sich der Gruppenrufsteuerungskanal befindet.

12. Basisstation, umfassend:
ein Empfangsmodul, das zum Empfangen einer Nachricht zur Anforderung des Einrichtens eines Gruppenanrufs konfiguriert ist, die einen Gruppenidentifikator umfasst, der eine Gruppe identifiziert, die aus einem anrufenden Benutzergerät und mindestens einem angerufenen Benutzergerät besteht, und durch einen Gruppenrufserver gesendet wird; und
ein Sendemodul, das zum periodischen Senden des Gruppenidentifikators und Gruppenressourcenortsinformationen, die dem Gruppenidentifikator entsprechen, über einen Gruppenrufsteuerungskanal konfiguriert ist, wobei die Gruppenressourcenortsinformationen angeben, in welcher Gruppenressource alle des mindestens einen angerufenen Benutzergeräts innerhalb der durch den gesendeten Gruppenidentifikator identifizierten Gruppe Gruppenrufdaten empfangen.

13. Basisstation nach Anspruch 12, wobei die Gruppenressourcenortsinformationen eine Sendeperiode der Gruppenrufdaten umfassen.

14. Basisstation nach Anspruch 12 oder 13, wobei das Sendemodul ferner zum Senden eines Kanalidentifikators, der dem Gruppenidentifikator entspricht, über den Gruppenrufsteuerungskanal konfiguriert ist.

15. Basisstation nach Anspruch 13 oder 14, wobei die Gruppenressourcenortsinformationen ferner Informationen über einen Startrahmen, in dem sich die Gruppenrufdaten befinden, oder Informationen über einen Startrahmen, in dem sich die Gruppenrufdaten befinden, und Informationen über einen Subrahmen, in dem sich die Gruppenrufdaten befinden, umfassen.

16. Basisstation nach einem der Ansprüche 12 bis 15, wobei
das Sendemodul ferner zum periodischen Broadcasten einer Systemnachricht konfiguriert ist, wobei die Systemnachricht Ortsangabeinformationen des Gruppenrufsteuerungskanals umfasst.

17. Basisstation nach einem der Ansprüche 12 bis 16, wobei die Ortsangabeinformationen einen Typ der folgenden Informationen umfassen:
Informationen über eine Sendeperiode des Gruppenrufsteuerungskanals; Informationen über eine Sendeperiode des Gruppenrufsteuerungskanals und Informationen über einen Startrahmen, in dem sich der Gruppenrufsteuerungskanal befindet; oder
Informationen über eine Sendeperiode des Gruppenrufsteuerungskanals, Informationen über einen Startrahmen, in dem sich der Gruppenrufsteuerungskanal befindet, und Informationen über einen Subrahmen, in dem sich der Gruppenrufsteuerungskanal befindet.

18. Angerufenes Benutzergerät, umfassend:
ein Erkennungsmodul, das zum Erkennen eines Gruppenrufsteuerungskanals gemäß den Ortsangabeinformationen konfiguriert ist, die Informationen zum Erkennen des Gruppenrufsteuerungskanals von dem Gruppenrufsteuerungskanal, der periodisch durch eine Basisstation gesendet wird, durch das angerufene Benutzergerät sind; und ein Empfangsmodul, das für Folgendes konfiguriert ist: wenn das Erkennungsmodul erkennt, dass der Gruppenrufsteuerungskanal einen Gruppenidentifikator umfasst, Identifizieren einer Gruppe bestehend aus einem anrufenden Benutzergerät und mindestens einem angerufenen Benutzergerät entsprechend der Gruppe, zu der das angerufene Benutzergerät gehört, Empfangen von Gruppenressourcenortsinformationen, die angeben, auf welcher Gruppenressource alle des mindestens einen angerufenen Benutzergeräts innerhalb der durch den Gruppenidentifikator identifizierten Gruppe Gruppenrufdaten empfangen, und die in dem Gruppenrufsteuerungskanal enthalten sind, wobei
das Empfangsmodul ferner zum Empfangen der durch die Basisstation gesendeten Gruppenrufdaten an einem Gruppenressourcenort konfiguriert ist, der den Gruppenressourcenortsinformationen entspricht.

19. Angerufenes Benutzergerät nach Anspruch 18, wobei die Gruppenressourcenortsinformationen ferner eine Sendeperiode der Gruppenrufdaten umfassen.

20. Angerufenes Benutzergerät nach Anspruch 19, wobei die Gruppenressourcenortsinformationen ferner Informationen über einen Startrahmen, in dem sich die Gruppenrufdaten befinden, oder Informationen über einen Startrahmen, in dem sich die Gruppenrufdaten befinden, und Informationen über einen Subrahmen, in dem sich die Gruppenrufdaten befinden, umfassen.

21. Angerufenes Benutzergerät nach einem der Ansprüche 18 bis 20, wobei das Empfangsmodul ferner zum periodischen Empfangen einer Systemnachricht konfiguriert ist, die durch die Basisstation als Broadcast abgestrahlt wird, wobei die Systemnachricht die Ortsangabeinformationen umfasst.

22. Angerufenes Benutzergerät nach einem der Ansprüche 18 bis 21, wobei die Ortsangabeinformationen einen Typ der folgenden Informationen umfassen:
Informationen über eine Sendeperiode des Gruppenrufsteuerungskanals; Informationen über eine Sendeperiode des Gruppenrufsteuerungskanals und Informationen über einen Startrahmen, in dem sich der Gruppenrufsteuerungskanal befindet; oder
Informationen über eine Sendeperiode des Gruppenrufsteuerungskanals, Informationen über einen Startrahmen, in dem sich der Gruppenrufsteuerungskanal befindet, und Informationen über einen Subrahmen, in dem sich der Gruppenrufsteuerungskanal befindet.

## Revendications

1. Procédé de traitement d'appel de groupe exécuté par une station de base, le procédé comprenant les étapes suivantes :
recevoir un message de demande d'établissement d'appel de groupe qui comprend un identifiant de groupe, identifier un groupe constitué d'un équipement d'utilisateur appelant et d'au moins un équipement d'utilisateur appelé, et qui est envoyé par un serveur d'appel de groupe ; et
envoyer, périodiquement, par un canal de contrôle d'appel de groupe, l'identifiant de groupe et les informations d'emplacement de ressources de groupe correspondant à l'identifiant de groupe, où les informations d'emplacement de ressources de groupe indiquent dans quelles ressources de groupe l'ensemble de l'au moins un équipement d'utilisateur appelé dans le groupe identifié par l'identifiant de groupe envoyé reçoit les données d'appel de groupe.

2. Procédé selon la revendication 1, dans lequel les informations d'emplacement de ressources de groupe comprennent une période d'envoi des données d'appel de groupe.

3. Procédé selon la revendication 1 ou la revendication 2, dans lequel l'envoi, par un canal de contrôle d'appel de groupe qui est envoyé périodiquement, de l'identifiant de groupe et des informations d'emplacement de ressources de groupe correspondant à l'identifiant de groupe comprend en outre l'étape suivante :
envoyer, par le canal de contrôle d'appel de groupe, un identifiant de canal correspondant à l'identifiant de groupe.

4. Procédé selon la revendication 2 ou la revendication 3, dans lequel les informations d'emplacement de ressources de groupe comprennent en outre des informations sur une trame de départ dans laquelle les données d'appel de groupe sont situées, ou des informations sur une trame de départ dans laquelle les données d'appel de groupe sont situées et des informations sur une sous-trame dans laquelle les données d'appel de groupe sont situées.

5. Procédé selon l'une quelconque des revendications 1 à 4, dans lequel, avant l'envoi, par un canal de contrôle d'appel de groupe qui est périodiquement envoyé, de l'identifiant de groupe et des informations d'emplacement de ressources de groupe correspondant à l'identifiant de groupe, le procédé comprend en outre l'étape suivante :
diffuser périodiquement un message système, où le message système comprend des informations d'indication d'emplacement du canal de contrôle d'appel de groupe.

6. Procédé selon l'une quelconque des revendications 1 à 5, dans lequel les informations d'indication d'emplacement comprennent un type des informations suivantes :
des informations sur une période d'envoi du canal de contrôle d'appel de groupe ; des informations sur une période d'envoi du canal de contrôle d'appel de groupe et des informations sur une trame de départ dans laquelle le canal de contrôle d'appel de groupe est situé ; ou
des informations sur une période d'envoi du canal de contrôle d'appel de groupe, des informations sur une trame de départ dans laquelle le canal de contrôle d'appel de groupe est situé, et des informations sur une sous-trame dans laquelle le canal de contrôle d'appel de groupe est situé.

7. Procédé de traitement d'appel de groupe exécuté par un équipement d'utilisateur appelé, le procédé comprenant les étapes suivantes :
détecter un canal de contrôle d'appel de groupe conformément à des informations d'indication d'emplacement, qui sont des informations pour détecter, par l'équipement d'utilisateur appelé, le canal de contrôle d'appel de groupe, du canal de contrôle d'appel de groupe périodiquement envoyées par une station de base ;
lorsque le canal de contrôle d'appel de groupe comprend un identifiant de groupe, identifier un groupe consistant en un équipement d'utilisateur appelant et au moins un équipement d'utilisateur appelé, correspondant au groupe auquel l'équipement d'utilisateur appelé appartient, recevoir des informations d'emplacement de ressources de groupe, indiquant à quelles ressources de groupe l'ensemble de l'au moins un équipement d'utilisateur appelé dans le groupe identifié par l'identifiant de groupe reçoit des données d'appel de groupe, et comprises dans le canal de contrôle d'appel de groupe ; et
recevoir, au niveau d'un emplacement de ressources de groupe correspondant aux informations d'emplacement de ressources de groupe, les données d'appel de groupe envoyées par la station de base.

8. Procédé selon la revendication 7, dans lequel les informations d'emplacement de ressources de groupe comprennent une période d'envoi des données d'appel de groupe.

9. Procédé selon la revendication 8, dans lequel les informations d'emplacement de ressources de groupe comprennent en outre des informations sur une trame de départ dans laquelle les données d'appel de groupe sont situées, ou des informations sur une trame de départ dans laquelle les données d'appel de groupe sont situées et des informations sur une sous-trame dans laquelle les données d'appel de groupe sont situées.

10. Procédé selon l'une quelconque des revendications 7 à 9, dans lequel, avant la détection d'un canal de contrôle d'appel de groupe conformément à des informations d'indication d'emplacement du canal de contrôle d'appel de groupe périodiquement envoyées par la station de base, le procédé comprend en outre l'étape suivante :
recevoir périodiquement un message système diffusé par la station de base, où le message système comprend les informations d'indication d'emplacement.

11. Procédé selon l'une quelconque des revendications 7 à 10, dans lequel les informations d'indication d'emplacement comprennent un type des informations suivantes :
des informations sur une période d'envoi du canal de contrôle d'appel de groupe ;
des informations sur une période d'envoi du canal de contrôle d'appel de groupe et des informations sur une trame de départ dans laquelle le canal de contrôle d'appel de groupe est situé ; ou
des informations sur une période d'envoi du canal de contrôle d'appel de groupe, des informations sur une trame de départ dans laquelle le canal de contrôle d'appel de groupe est situé, et des informations sur une sous-trame dans laquelle le canal de contrôle d'appel de groupe est situé.

12. Station de base comprenant :
un module de réception, configuré pour recevoir un message de demande d'établissement d'appel de groupe qui comprend un identifiant de groupe, identifier un groupe constitué d'un équipement d'utilisateur appelant et d'au moins un équipement d'utilisateur appelé, et qui est envoyé par un serveur d'appel de groupe ; et
un module d'envoi, configuré pour envoyer, périodiquement, par un canal de contrôle d'appel de groupe, l'identifiant de groupe et les informations d'emplacement de ressources de groupe correspondant à l'identifiant de groupe, où les informations d'emplacement de ressources de groupe indiquent dans quelles ressources de groupe l'ensemble de l'au moins un équipement d'utilisateur appelé dans le groupe identifié par l'identifiant de groupe envoyé reçoit les données d'appel de groupe.

13. Station de base selon la revendication 12, dans laquelle les informations d'emplacement de ressources de groupe comprennent une période d'envoi des données d'appel de groupe.

14. Station de base selon la revendication 12 ou la revendication 13, dans laquelle le module d'envoi est en outre configuré pour envoyer, par le canal de contrôle d'appel de groupe, un identifiant de canal correspondant à l'identifiant de groupe.

15. Station de base selon la revendication 13 ou la revendication 14, dans laquelle les informations d'emplacement de ressources de groupe comprennent en outre des informations sur une trame de départ dans laquelle les données d'appel de groupe sont situées, ou des informations sur une trame de départ dans laquelle les données d'appel de groupe sont situées et des informations sur une sous-trame dans laquelle les données d'appel de groupe sont situées.

16. Station de base selon l'une quelconque des revendications 12 à 15, dans laquelle :
le module d'envoi est en outre configuré pour diffuser périodiquement un message système, où le message système comprend des informations d'indication d'emplacement du canal de contrôle d'appel de groupe.

17. Station de base selon l'une quelconque des revendications 12 à 16, dans laquelle les informations d'indication d'emplacement comprennent un type des informations suivantes :
des informations sur une période d'envoi du canal de contrôle d'appel de groupe ; des informations sur une période d'envoi du canal de contrôle d'appel de groupe et des informations sur une trame de départ dans laquelle le canal de contrôle d'appel de groupe est situé ; ou
des informations sur une période d'envoi du canal de contrôle d'appel de groupe, des informations sur une trame de départ dans laquelle le canal de contrôle d'appel de groupe est situé, et des informations sur une sous-trame dans laquelle le canal de contrôle d'appel de groupe est situé.

18. Équipement d'utilisateur appelé comprenant :
un module de détection, configuré pour détecter un canal de contrôle d'appel de groupe conformément à des informations d'indication d'emplacement, qui sont des informations pour détecter, par l'équipement d'utilisateur appelé, le canal de contrôle d'appel de groupe, du canal de contrôle d'appel de groupe périodiquement envoyées par une station de base ; et
un module de réception, configuré pour : lorsque le module de détection détecte que le canal de contrôle d'appel de groupe comprend un identifiant de groupe, identifier un groupe consistant en un équipement d'utilisateur appelant et au moins un équipement d'utilisateur appelé, correspondant au groupe auquel l'équipement d'utilisateur appartient, recevoir des informations d'emplacement de ressources de groupe, indiquant à quelles ressources de groupe l'ensemble de l'au moins un équipement d'utilisateur appelé dans le groupe identifié par l'identifiant de groupe reçoit des données d'appel de groupe, et comprises dans le canal de contrôle d'appel de groupe, où
le module de réception est en outre configuré pour recevoir, au niveau d'un emplacement de ressources de groupe correspondant aux informations d'emplacement de ressources de groupe, les données d'appel de groupe envoyées par la station de base.

19. Équipement d'utilisateur appelé selon la revendication 18, dans lequel les informations d'emplacement de ressources de groupe comprennent en outre une période d'envoi des données d'appel de groupe.

20. Équipement d'utilisateur appelé selon la revendication 19, dans lequel les informations d'emplacement de ressources de groupe comprennent en outre des informations sur une trame de départ dans laquelle les données d'appel de groupe sont situées, ou des informations sur une trame de départ dans laquelle les données d'appel de groupe sont situées et des informations sur une sous-trame dans laquelle les données d'appel de groupe sont situées.

21. Équipement d'utilisateur appelé selon l'une quelconque des revendications 18 à 20, dans lequel :
le module de réception est en outre configuré pour recevoir périodiquement un message système diffusé par la station de base, où le message système comprend les informations d'indication d'emplacement.

22. Équipement d'utilisateur appelé selon l'une quelconque des revendications 18 à 21, dans lequel les informations d'indication d'emplacement comprennent un type des informations suivantes :
des informations sur une période d'envoi du canal de contrôle d'appel de groupe ;
des informations sur une période d'envoi du canal de contrôle d'appel de groupe et des informations sur une trame de départ dans laquelle le canal de contrôle d'appel de groupe est situé ; ou
des informations sur une période d'envoi du canal de contrôle d'appel de groupe, des informations sur une trame de départ dans laquelle le canal de contrôle d'appel de groupe est situé, et des informations sur une sous-trame dans laquelle le canal de contrôle d'appel de groupe est situé.
